# EUROPÄISCHE PATENTSCHRIFT

(11) **EP 3 698 676 B1**
(45) Veröffentlichungstag und Bekanntmachung des Hinweises auf die Patenterteilung: **03.03.2021**
(21) Anmeldenummer: 20157550.3
(22) Anmeldetag: 17.02.2020
(51) Int. Cl.: A47C 31/02, B21G 5/00, B21G 5/02, B68G 7/12, A47B 95/04, F16B 11/00, F16B 15/02

(54) **ZIERNAGELLEISTE**
DECORATIVE NAIL STRIP
TASSEAU DE CLOUAGE DÉCORATIF

(30) Priorität: 20.02.2019 DE 202019100953 U
(43) Veröffentlichungstag der Anmeldung: 26.08.2020
(73) Patentinhaber: Gerhard Weyland KG, 58636 Iserlohn (DE)
(72) Erfinder: Assmann, Christian, 58636 Iserlohn (DE)
(74) Vertreter: Haverkamp, Jens

(56) Entgegenhaltungen:
- DE-A1- 2 110 326
- DE-A1- 2 211 511
- GB-A- 191 110 063
- US-A- 4 943 197
- US-A1- 2003 147 722

## Beschreibung

Die Erfindung betrifft eine Ziernagelleiste mit einer Vielzahl von in einer Reihe angeordneten Ziernagelköpfen mit einer konkaven inneren Oberfläche, bei der die Ziernagelleiste mit jeweils im Abstand von mehreren Ziernagelköpfen angeordneten Nagelstiften ausgerüstet ist
Ziernagelleisten, mitunter auch als Ziernagelstangen oder Ziernagelstreifen angesprochen, werden zu dekorativen Zwecken bei Möbeln eingesetzt. Typischerweise wird durch eine solche Ziernagelleiste bei einem Polstermöbel der Übergang von einem Bezugsstoff in ein typischerweise aus Holz gefertigtes Möbelgestell verblendet. Auch wenn Ziernagelleisten primär nicht dem Zweck dienen, den Bezugsstoff an dem Möbelgestell zu befestigen, können Ziernagelleisten auch diesem Zweck dienen. Ziernagelleisten gewährleisten, dass die benachbart zueinander angeordneten Ziernagelköpfe exakt fluchtend in einer Reihe zueinander angeordnet sind. Hierauf ist bei dem Einschlagen von einzelnen Ziernägeln zum Ausbilden einer Ziernagelreihe besonderes Augenmerk zu richten. Dieses erfordert zudem ein entsprechendes Geschick des Werkers.

Bei Ziernagelleisten handelt es sich um umgeformte Blechstreifen, bei denen die Ziernagelköpfe geprägt sind, und zwar in die vorgesehene Ziernagelkopfform, typischerweise konvex. Bei einer vorbekannten Ausführung einer solchen Ziernagelleiste ist jeder vierte oder fünfte Ziernagelkopf im Durchmesser kleiner ausgeführt, mithin auch unterschiedlich hoch, und hat in seinem Zentrum eine Bohrung. Diese dient zum Befestigen der Ziernagelleiste an einem Möbelgestell mittels eines separaten Ziernagels. Ziernagelleisten werden in vielen Fällen mit einem galvanischen Überzug versehen, um diesen die gewünschte Anmutung zu verleihen. Damit die zum Befestigen der Ziernagelleiste eingesetzten Ziernägel, deren Stiftkopf dem Durchmesser der Ziernagelköpfe entspricht, nicht in Erscheinung treten zu lassen, sollen die Stiftköpfe dieser Fixierziernägel dieselbe Anmutung aufweisen wie die Ziernagelköpfe der Ziernagelleiste. Es erweist sich jedoch als kaum realisierbar, dass die Ziernagelköpfe, mit denen eine solche Ziernagelleiste an dem Möbelgestellt befestigt werden soll, exakt die gleiche Oberflächenanmutung aufweisen wie die Ziernagelleiste selbst. Begründet ist dieses durch die Vielzahl der möglichen Verfahrensparameter, die bei dem Galvanisierprozess einzuhalten sind. Typischerweise werden die Ziernagelköpfe und die Zierleisten nicht gleichzeitig galvanisiert. Selbst wenn dieses der Fall sein sollte, können exakt gleiche Anmutungen der Ziernagelköpfe der Ziernagelleiste und des Kopfes des Ziernagels zum Befestigen der Ziernagelleiste nicht hergestellt werden. Dieses liegt auch darin begründet, dass die Ziernägel zum Befestigen einer solchen Ziernagelleiste aus einem anderen Material, typischerweise einem anderen Stahl hergestellt sind als die Ziernagelleiste selbst. Auch dieses begründet die Schwierigkeit, zu einer mit einer farblichen Anmutung versehenen Ziernagelleiste Ziernägel zum Befestigen derselben an einem Möbelgestell mit exakt derselben Anmutung bereitzustellen, da unterschiedliche Materialien ein unterschiedliches Galvanisierverhalten haben. Die Folge ist, dass die zur Befestigung der Ziernagelleiste dienenden Ziernägel letztendlich doch, zumindest bei genauerem Hinsehen, in Erscheinung treten, was wiederum das gewünschte optische Erscheinungsbild einer solchen Ziernagelleiste an einem Polstermöbel beeinträchtigt.

Gemäß einer anderen Ausgestaltung werden die Ziernagelleisten mit Klammern an dem Möbel befestigt. Die Klammern sind quer zu einem zwei Ziernagelköpfe beabstandenden Steg angeordnet. Zwar weisen bei dieser Ausgestaltung die Ziernagelköpfe der Ziernagelleiste dieselbe Anmutung auf. Allerdings tritt eine Befestigung der Ziernagelleisten durch Klammern noch deutlicher in Erscheinung als bezüglich ihrer Farbanmutung von den Ziernagelköpfen der Ziernagelleiste sich unterscheidende Köpfe von Befestigungsnägeln.

DE 295 11 397 U1 offenbart ein Verbindungselement, beispielsweise für Verbindungen von Schichtholzplatten mit metallischen Unterkonstruktionen von Fahrzeugaufbauten mit einem sich an einen vorzugsweise eine Außenrillung aufweisenden Befestigungsschaft anschließenden Befestigungskopf. Der Befestigungskopf ist als Pendelkopf mit einem inneren Kopfstück und mit einer das innere Kopfstück umgrenzenden sowie die Pendelausgleichsbewegung des inneren Kopfstücks und des Befestigungsschaftes zulassenden Kappe ausgebildet. Bei diesem Verbindungselement handelt es sich um ein einzelnes Verbindungselement.

DE 2 211 511 A offenbart einen Magazinstreifen für ein Gerät zum Eintreiben von Ziernägeln. In einem solchen Magazinstreifen werden mehrere einzelne Ziernägel gehalten, die dann bei einer Betätigung des Eintreibgerätes aus dem Magazinstreifen herausgedrückt und in das mit diesen Ziernägeln zu bestückende Material eingetrieben werden.

GB 10 063 A offenbart eine Ziernagelleiste mit den Merkmalen des Oberbegriffes des Anspruchs 1. Diese vorbekannte Ziernagelleiste besteht aus einer Vielzahl von in einer Reihe angeordneter Ziernagelköpfe. Diese sind durch einen Draht zusammengehalten, der durch einen Lottropfen im Bereich der Scheitelwölbung jedes Ziernagelkopfes an dessen Innenseite befestigt ist. Dieser Verbindungsdraht erstreckt sich über die Länge der Ziernagelkopfreihe und verbindet jeweils zwei nebeneinanderliegende Ziernagelköpfe durch einen unter deren unteren Abschluss herumgeführten Drahtabschnitt. Zum Anschließen dieser Ziernagelleiste an ein Möbelstück verfügt dieses über Nagelstifte. Diese Nagelstifte sind in einigen der Vielzahl von Ziernagelköpfen angeordnet und mit dem Lottropfen an dem jeweiligen Ziernagelkopf befestigt. Diese Nagelstifte verfügen nur über einen im Durchmesser sehr kleinen Kopf. Bei dieser vorbekannten Ziernagelleiste liegt der Stiftkopf des Nagelstiftes an dem die Ziernagelköpfe verbindenden Draht an und ist in dieser Stellung durch den Lottropfen gehalten. Nicht unproblematisch ist die Verarbeitung dieser vorbekannten Ziernagelleiste beim Eintreiben der Spannstifte, da dieses zu Beschädigungen des Ziernagelkopfes führen kann.

Ausgehend von GB 10 063 A liegt der Erfindung die Aufgabe zugrunde, eine Ziernagelleiste vorzuschlagen, bei der nicht nur die Befestigungsmittel zum Befestigen der Ziernagelleiste an einem Möbelgestell nicht in Erscheinung treten, sondern auch die Designfreiheit in der Auslegung der Ziernagelköpfe vergrößert und eine Handhabung der Ziernagelleiste vereinfacht ist.

Gelöst wird diese Aufgabe erfindungsgemäß durch einen eingangs genannte, gattungsgemäße Ziernagelleiste, bei der jeder Nagelstift einen Stiftkopf mit einer zu der Innengeometrie eines Ziernagelkopfes komplementäre Geometrie seiner Außenseite umfasst, sich mit seinem äußeren Rand bis in den Bereich des umlaufenden Abschlusses des ihn tragenden Ziernagelkopfes erstreckt, mit dem umlaufenden Abschluss des ihn tragenden Ziernagelkopfes bündig abschließt und an der Innenseite eines Ziernagelkopfes durch eine Klebeverbindung befestigt ist.

Diese Ziernagelleiste ist mit Nagelstiften ausgerüstet. Diese sind jeweils im Abstand von mehreren Ziernagelköpfen angeordnet. Jeder Nagelstift verfügt über einen Stiftkopf mit einer zu der Geometrie des diesen tragenden Ziernagelkopfes komplementären Geometrie. Da die Ziernagelköpfe unterseitig typischerweise durch die konvex geprägte Wölbung der Ziernagelkopfaußenseiten konkav, insbesondere konkav gewölbt sind, ist die Außenseite des Stiftkopfes an diese konkave Formgebung angepasst und damit selbst konvex geformt. Der Stiftkopf füllt die innere Oberfläche eines solchen Ziernagelkopfes vollständig aus. Von Besonderheit ist, dass der Stiftkopf mit seiner Außenseite an der Innenseite des Ziernagelkopfes durch eine Klebeverbindung befestigt ist. Typischerweise wird hierzu ein aushärtbarer Kleber verwendet. Eine solche Befestigung genügt den Anforderungen. Insbesondere wird bei der Herstellung keine Wärme, wie etwa bei einer Schweiß- oder Lötverbindung in die Ziernagelleiste eingetragen, was zu einer unerwünschten Farbänderung im Bereich des Wärmeeintrages führen könnte.

Die Ziernagelleisten können auf herkömmliche Art und Weise aus Blechstreifen hergestellt und anschließend mit einem galvanischen Überzug versehen werden. Eingesetzt hierfür wird ein kaltgewalztes Stahlblech mit einem C-Anteil von etwa 0,05 %. Anschließend werden die Nagelstifte an den hierfür vorgesehenen Positionen innerhalb der Ziernagelleiste durch die beschriebene Klebeverbindung angebracht. Wenn der zum Befestigen der Nagelstifte verwendete Kleber gegenüber den bei einer Galvanik eingesetzten Chemikalien beständig ist, können die Nagelstifte auch vor der galvanischen Behandlung des geformten Blechstreifens an diesem befestigt werden.

Von Vorteil bei dem vorbeschriebenen Konzept dieser Ziernagelleiste ist, dass man grundsätzlich nicht an einen bestimmten Lochabstand zum Setzen der Nagelstifte gebunden ist. Vielmehr besteht auch die Möglichkeit, dass die Nagelstifte erst kurz vor dem Anbringen der Ziernagelleiste an dem Möbelstück an die Innenseiten der Ziernagelköpfe angeklebt werden. Zudem besteht die Möglichkeit, bereits vorkonfektionierte Ziernagelleisten, sollte es erforderlich sein, um zusätzliche Nagelstifte zu ergänzen.

Durch das Ausfüllen des unterseitigen Hohlraums eines einen Nagelstift tragenden Ziernagelkopfes durch dessen Stiftkopf ist der Ziernagelkopf vollständig unterfüttert, sodass auf seine Außenseite aufgebrachte Hammerschläge zum Eintreiben des Stiftes des darunter befindlichen Nagelstiftes die Oberfläche nicht deformieren. Der zwischen dem Stiftkopf und der inneren Oberfläche eines diesen tragenden Ziernagelkopfes befindliche Kleber dient in diesem Zusammenhang als Ausgleichsmasse auch zum Auffüllen von unter Umständen zwischen diesen beiden Befestigungspartnern befindlichen Spalten. Besonders wirkungsvoll ist die Verwendung eines aushärtbaren Klebers, durch den auf die Außenseite eines Nagelkopfes aufgebrachte Hammerschläge, ohne den Kleber zu deformieren, an den Stiftkopf des Nagelstiftes weitergegeben werden.

Der Stiftkopf erstreckt sich bis zum unteren umlaufenden Abschluss des diesen tragenden Ziernagelkopfes. Der untere umlaufende Abschluss des Stiftkopfes schließt mit der Unterseite des Ziernagelkopfes ab. Durch diese Maßnahmen ist gewährleistet, dass der Stiftkopf mit seinem unteren umlaufenden Abschluss zum Begrenzen der Eintreibbewegung an dem Befestigungsgrund, etwa dem Möbelgestell, anliegt und dadurch den unteren umlaufenden Abschluss des ihn tragenden Ziernagelkopfes aussteift. Demzufolge wird der Ziernagelkopf, der einen solchen Nagelstift trägt, auch dann nicht deformiert, wenn der Nagelstift bereits ausreichend weit in das Möbelgestell eingetrieben ist und dennoch weitere Hammerschläge auf den diesen tragenden Ziernagelkopf wirken.

Bei dieser Ziernagelleiste sind die Nagelstifte typischerweise aus einem anderen Material, insbesondere härteren Material, hergestellt als die Nagelleiste als solche. Die Nagelstifte wird man typischerweise aus einem Carbonstahl fertigen.

Die Stiftköpfe der Nagelstifte sind durch einen Ziernagelkopf vollständig verblendet, so dass für die Anmutung der Ziernagelleiste ausschließlich deren Oberflächengestaltung verantwortlich ist. Ist eine solche Nagelleiste an einem Möbelgestell befestigt, ist nicht mehr erkennbar, welcher Ziernagelkopf einen Nagelstift trägt.

Die noch nicht mit Nagelstiften ausgerüstete Nagelleiste kann in herkömmlicher Art und Weise hergestellt werden. Bei dem beschriebenen Konzept besteht auch die Möglichkeit, dass die Nagelleiste eine andere Beschichtung als einen galvanischen Überzug trägt oder gar aus einem anderen Material als der Nagelstift hergestellt ist. Denkbar sind beispielsweise auch Ziernagelleisten aus Kunststoff, die an den vorgegebenen Ziernagelkopfpositionen einen Nagelstift der vorbeschriebenen Art tragen.

Die Erfindung ist nachfolgend anhand eines Ausführungsbeispiels unter Bezugnahme auf die beigefügten Figuren beschrieben. Es zeigen:
- **Fig. 1:**: eine Draufsicht auf eine Ziernagelleiste,
- **Fig. 2:**: eine Seitenansicht der Ziernagelleiste der Figur 1 und
- **Fig. 3:**: eine vergrößerte Schnittdarstellung durch den in Figur 1 gezeigten Abschnitt der Ziernagelleiste entlang der Linie A-A.

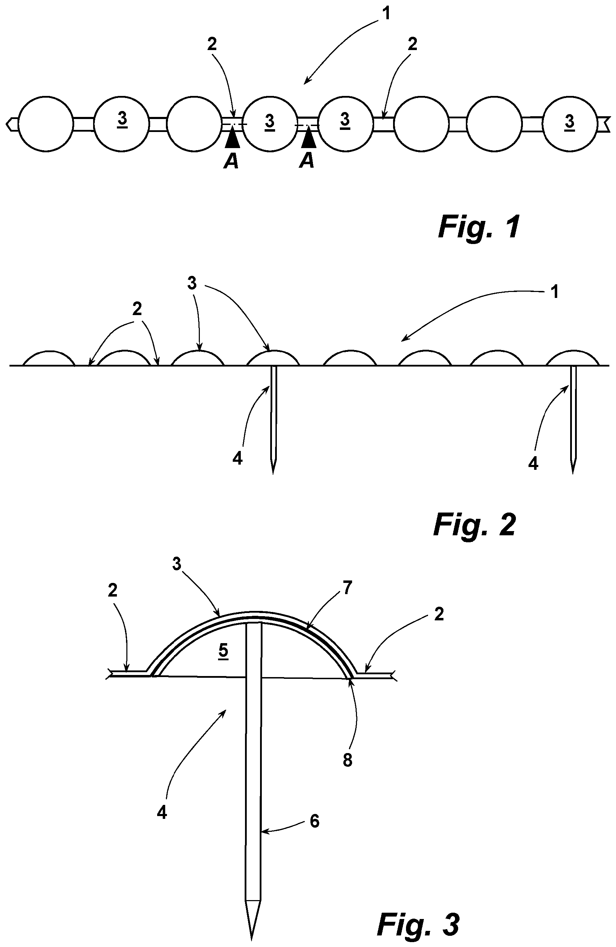

Eine Ziernagelleiste 1 ist nach herkömmlicher Art und Weise aus einer Blechplatine hergestellt. Gebildet ist die Ziernagelleiste 1, soweit dieses für einen Nutzer erkennbar ist, aus einer Vielzahl von in Reihe und mit Abstand zueinander und durch Stege 2 getrennte Ziernagelköpfe 3. Die Ziernagelköpfe 3 sind, wie aus der Seitenansicht der Figur 2 ersichtlich, nach außen hin konvex gewölbt. In die in Figur 2 erkennbare Geometrie ist die ursprüngliche Blechplatine durch einen Prägeprozess gebracht worden. In einem nachfolgenden Bearbeitungsschritt ist der geprägte Blechstreifen mit einem galvanischen Überzug beschichtet worden.

Die Ziernagelleiste 1 trägt mehrere Nagelstifte 4, die mit Abstand von mehreren Ziernagelköpfen 3 zueinander angeordnet, jeweils durch eine Klebeverbindung in der konkaven inneren Wölbung eines Ziernagelkopfes 3 befestigt sind. Wie aus der Draufsicht der Figur 1 erkennbar, sind die Nagelstifte 4, wenn die Ziernagelleiste 1 an einem Möbelstück befestigt ist, nicht erkennbar.

Figur 3 zeigt in einem schematisierten Querschnitt einen an der Innenseite eines Ziernagelkopfes 3 durch eine Klebeverbindung befestigten Nagelstift 4. Der Nagelstift 4 verfügt über einen Stiftkopf 5. Dessen Außenseite ist komplementär zu der Innenwölbung des Ziernagelkopfes 3 gewölbt. An seinen inneren Scheitel ist ein Stift 6 befestigt. Bei dem Nagelstift 4 kann es sich um einen handelsüblichen Ziernagel handeln, der für diese Zwecke aufgrund seines großen und ohnehin gewölbten Kopfes geeignet ist, an die Innenseite eines Ziernagelkopfes 3 zum Ausbilden der Ziernagelleiste 1 angeschlossen zu werden. Zwischen er äußeren Oberfläche des Stiftkopfes 5 und der hierzu komplementären inneren Oberfläche des Ziernagelkopfes 3 befindet sich eine Klebeschicht 7, bei der es sich bei dem dargestellten Ausführungsbeispiel um eine Klebeschicht, bereitgestellt durch einen aushärtenden Kleber, handelt. Wie aus Figur 3 erkennbar, ist die innere Oberfläche des Ziernagelkopfes 3 insgesamt von dem Stiftkopf 5 unterfüttert. Der Stiftkopf 5 endet mit seinem äußeren unteren Abschluss bündig mit dem Abschluss des Ziernagelkopfes 3 und somit mit der Unterseite der an den Ziernagelkopf 3 angeformten Stege 2. Dieses gewährleistet, dass auf die konvexe Außenseite des Ziernagelkopfes 3 auftreffende Hammerschläge zum Eintreiben des Stiftes 6 in ein Werkstück nicht zu einer Deformation des Ziernagelkopfes 3 führt. Der Stift 6 wird soweit in das Werkstück eingetrieben, bis der untere Abschluss 8 des Stiftkopfes 5 an dem Material des Werkstückes anliegt.

Von Besonderheit bei der Ziernagelleiste 1 ist, dass sämtliche Ziernagelköpfe 3 eine identische Anmutung aufweisen und selbst bei genauem Hinsehen nicht erkennbar ist, unter welchem Ziernagelkopf 3 sich ein Nagelstift 4 befindet.

Die Erfindung ist anhand eines Ausführungsbeispiels beschrieben worden. Ohne den Umfang der geltenden Ansprüche zu verlassen, ergeben sich für einen Fachmann zahlreiche weitere Möglichkeiten, die Erfindung umzusetzen, ohne dass dieses im Rahmen dieser Ausführungen im Einzelnen dargelegt werden müsste.

### Bezugszeichenliste

- 1: Ziernagelleiste
- 2: Steg
- 3: Ziernagelkopf
- 4: Nagelstift
- 5: Stiftkopf
- 6: Stift
- 7: Klebeschicht
- 8: Abschluss

## Patentansprüche

1. Ziernagelleiste mit einer Vielzahl von in einer Reihe angeordneten Ziernagelköpfen (3) mit einer konkaven inneren Oberfläche, wobei die Ziernagelleiste (1) mit jeweils im Abstand von mehreren Ziernagelköpfen (3) angeordneten Nagelstiften (4) ausgerüstet ist, **dadurch gekennzeichnet, dass** jeder Nagelstift (4) einen Stiftkopf (5) mit einer zu der Innengeometrie eines Ziernagelkopfes (3) komplementäre Geometrie seiner Außenseite umfasst, sich mit seinem äußeren Rand bis in den Bereich des umlaufenden Abschlusses (8) des ihn tragenden Ziernagelkopfes (3) erstreckt, mit dem umlaufenden Abschluss (8) des ihn tragenden Ziernagelkopfes (3) bündig abschließt und an der Innenseite eines Ziernagelkopfes (3) durch eine Klebeverbindung (7) befestigt ist.

2. Ziernagelleiste nach Anspruch 1, **dadurch gekennzeichnet, dass** zumindest die die Nagelstifte (4) tragenden Ziernagelköpfe (3) eine konkav gewölbte innere Oberfläche aufweisen.

3. Ziernagelleiste nach einem der Ansprüche 1 oder 2, **dadurch gekennzeichnet, dass** die Stiftköpfe (5) der Nagelstifte (4) aus einem Carbonstahl gefertigt sind.

4. Ziernagelleiste nach einem der Ansprüche 1 bis 3, **dadurch gekennzeichnet, dass** die Klebeverbindung (7) zwischen den Stiftköpfen (5) der Nagelstifte (4) und den Ziernagelköpfen (3) mit einem aushärtbaren Kleber erstellt ist.

5. Ziernagelleiste nach einem der Ansprüche 1 bis 4, **dadurch gekennzeichnet, dass** die Außenseiten der Ziernagelköpfe (3) konvex gewölbt sind.

6. Ziernagelleiste nach einem der Ansprüche 1 bis 5, **dadurch gekennzeichnet, dass** jeweils zwei benachbarte Ziernagelköpfe (3) durch einen Steg (2) voneinander beabstandet sind.

7. Ziernagelleiste nach einem der Ansprüche 1 bis 6, **dadurch gekennzeichnet, dass** die Ziernagelleiste (1) aus einem Blechstreifen hergestellt und mit einem galvanischen Überzug beschichtet ist.

## Claims

1. Decorative nail strip comprising a plurality of decorative nail heads (3) which are arranged in a row and have a concave inner surface, the decorative nail strip (1) being equipped with pins (4) arranged in each case at a distance of a plurality of decorative nail heads (3), **characterized in that** each pin (4) comprises a pin head (5) having a geometry on its outer face that is complementary to the inner geometry of a decorative nail head (3), extends with the outer edge thereof into the region of the circumferential rim (8) of the decorative nail head (3) carrying said pin, ends flush with the circumferential rim (8) of the decorative nail head (3) carrying said pin, and is attached to the inner face of a decorative nail head (3) by an adhesive connection (7).

2. Decorative nail strip according to claim 1, **characterized in that** at least the decorative nail heads (3) carrying the pins (4) have a concavely curved inner surface.

3. Decorative nail strip according to either claim 1 or claim 2, **characterized in that** the pin heads (5) of the pins (4) are made of carbon steel.

4. Decorative nail strip according to any of claims 1 to 3, **characterized in that** the adhesive connection (7) between the pin heads (5) of the pins (4) and the decorative nail heads (3) is produced by means of a curable adhesive.

5. Decorative nail strip according to any of claims 1 to 4, **characterized in that** the outer faces of the decorative nail heads (3) are convexly curved.

6. Decorative nail strip according to any of claims 1 to 5, **characterized in that** two adjacent decorative nail heads (3) are in each case spaced apart from one another by a bridge (2).

7. Decorative nail strip according to any of claims 1 to 6, **characterized in that** the decorative nail strip (1) is produced from a sheet metal strip and coated with a galvanic coating.

## Revendications

1. Tasseau de clouage décoratif comportant une pluralité de têtes de clous décoratifs (3) disposées en une rangée et comportant une surface intérieure concave, le tasseau de clouage décoratif (1) étant équipé de pointes à tête d'homme (4) disposées à distance de plusieurs têtes de clous décoratifs (3), **caractérisé en ce que** chaque pointe à tête d'homme (4) entoure une tête de pointe (5) avec une géométrie de sa face extérieure complémentaire à la géométrie intérieure d'une tête de clou décoratif (3), qu'elle s'étend, avec son bord extérieur, jusque dans la zone de l'extrémité périphérique (8) de la tête de clou décoratif (3) la portant, qu'elle affleure l'extrémité périphérique (8) de la tête de clou décoratif (3) la portant et qu'elle est fixée à la face intérieure d'une tête de clou décoratif (3) par une liaison adhésive (7).

2. Tasseau de clouage décoratif selon la revendication 1, **caractérisé en ce qu'**au moins les têtes de clous décoratifs (3) portant les pointes à tête d'homme (4) présentent une surface intérieure incurvée de manière concave.

3. Tasseau de clouage décoratif selon l'une des revendications 1 ou 2, **caractérisé en ce que** les têtes de pointe (5) des pointes à tête d'homme (4) sont en acier au carbone.

4. Tasseau de clouage décoratif selon l'une des revendications 1 à 3, **caractérisé en ce que** la liaison adhésive (7) entre les têtes de pointe (5) des pointes à tête d'homme (4) et les têtes de clous décoratifs (3) est réalisée au moyen d'un adhésif durcissable.

5. Tasseau de clouage décoratif selon l'une des revendications 1 à 4, **caractérisé en ce que** les faces extérieures des têtes de clous décoratifs (3) sont incurvées de manière convexe.

6. Tasseau de clouage décoratif selon l'une des revendications 1 à 5, **caractérisé en ce que** deux têtes de clous décoratifs adjacentes (3) sont espacées l'une de l'autre par une entretoise (2).

7. Tasseau de clouage décoratif selon l'une des revendications 1 à 6, **caractérisé en ce que** le tasseau de clouage décoratif (1) est fabriqué à partir d'une bande de tôle et est revêtu d'un revêtement galvanique.
